# EUROPÄISCHE PATENTSCHRIFT

(11) **EP 3 652 586 B1**
(45) Veröffentlichungstag und Bekanntmachung des Hinweises auf die Patenterteilung: **15.09.2021**
(21) Anmeldenummer: 18740579.0
(22) Anmeldetag: 12.07.2018
(51) Int. Cl.: G02F 1/1333

(54) **ANZEIGEVORRICHTUNG MIT INTEGRIERTER, OPTISCH ARBEITENDER NÄHERUNGSSENSORIK**
DISPLAY DEVICE HAVING INTEGRATED, OPTICALLY OPERATING PROXIMITY SENSOR SYSTEM
DISPOSITIF D'AFFICHAGE AVEC CAPTEUR CAPACITIF INTÉGRÉ À FONCTIONNEMENT OPTIQUE

(30) Priorität: 14.07.2017 DE 102017212103; 18.09.2017 DE 102017121599
(43) Veröffentlichungstag der Anmeldung: 20.05.2020
(73) Patentinhaber: Behr-Hella Thermocontrol GmbH, 59557 Lippstadt (DE)
(72) Erfinder: SCHMIDT, Rüdiger, 33100 Paderborn (DE); SCHWAB, Tobias, 59556 Lippstadt (DE); TARNOWSKI, Tomasz, 59597 Erwitte (DE)
(74) Vertreter: dompatent von Kreisler Selting Werner - Partnerschaft von Patent- und Rechtsanwälten mbB
(86) Internationale Anmeldenummer: PCT/EP2018/068951
(87) Internationale Veröffentlichungsnummer: WO 2019/012046

(56) Entgegenhaltungen:
- WO-A1-2014/156399
- US-A1- 2010 220 269
- US-A1- 2011 193 818

## Beschreibung

Die Erfindung betrifft eine Anzeigevorrichtung mit integrierter, optisch arbeitender Näherungssensorik zur Erkennung eines sich innerhalb eines Beobachtungsraums vor der Anzeigevorrichtung befindenden Objekts wie z. B. einer Hand oder eines Fingers einer Hand einer Person.

Anzeigesysteme im Fahrzeug können mit einer Sensorik ausgerüstet sein, die die Annäherung eines Bedieners detektiert. Solche sogenannten Proximity-Sensoren arbeiten zum großen Teil optisch auf Basis von IR Licht, das für den Benutzer unsichtbar ist. Aus der Praxis kennt man Sensoren, die separat unterhalb oder seitlich neben dem Anzeigesystem verbaut sind. Aufgrund des stark begrenzten Bauraums und immer größer werdender Displays sind die Sensoren in der nahen Vergangenheit unter das Coverglas des Anzeigesystems platziert worden. Dennoch benötigen sie weiterhin Bauraum, was sich negativ auf das Erscheinungsbild der Anzeigesysteme auswirkt.

Anzeigevorrichtungen mit in Gehäusen untergebrachtem Display und mit ebenfalls im Gehäuse angeordneter optischer Näherungssensorik sind in
- DE 10 2016 100 363 A1
- GB 2 486 000 A
- KRATZ, Sven; ROHS, Michael: Hoverflow: Exploring Around-Device Interaction with IR Distance Sensors, 11th International Conference on Human-Computer Interaction with Mobile Devices and Services, MobileHCI '09, Bonn, Germany, September 15-18, 2009. Conference Proceedings, ISBN 978-1-60558-281-8. New York: ACM, 2009. Article No. 42.
- KRATZ, Sven: Sensor-Based User Interface Concepts for Continuous, Around-Device and Gestural Interaction on Mobile Devices. Dissertation, Fakultät für Mathematik, Informatik und Statistik, Ludwig-Maximilians-Universität München. München: LMU, 2012.
   und
- OH, KyongSae; HWANG, Seok-Hee; YOU, SeungBin et al.: Gesture Sensor for Mobile Devices - White Paper, Firmenanschrift, Samsung Electronics Co. Ltd. Suwon-si, Gyeonggi-do, KR: Samsung, 2013
beschrieben.

Ferner ist aus US-A-2011/193818 eine Anzeigenvorrichtung gemäß dem Oberbegriff des Anspruchs 1 bekannt.

Aufgabe der Erfindung ist es, eine Anzeigevorrichtung mit integrierter Näherungssensorik zu schaffen, wobei die Anzeigevorrichtung sich durch eine kompakte Bauweise auszeichnet.

Zur Lösung dieser Aufgabe wird mit der Erfindung eine Anzeigevorrichtung mit integrierter, optisch arbeitender Näherungssensorik zur Erkennung eines sich innerhalb eines Beobachtungsraums vor der Anzeigevorrichtung befindenden Objekts wie z. B. einer Hand oder eines Fingers einer Hand einer Person vorgeschlagen, wobei die Anzeigevorrichtung versehen ist mit den Merkmalen des Anspruchs 1. Einzelne Ausgestaltungen der Erfindung sind Gegenstand der Unteransprüche.

Bei der hier vorgestellten Erfindung werden die Proximity-Sensoren oder zumindest ihre optischen Bauteile in die Anzeigeeinheit selbst, d. h. in das Display selbst integriert. Es wird also kein zusätzlicher Bauraum außerhalb des Displays benötigt, wodurch ein schlankes und fast rahmenloses Design möglich wird.

Der erfindungsgemäße Vorschlag geht dahin, entweder die gesamte Näherungssensorik oder aber Teile der Näherungssensorik, nämlich den Sensorstrahlungsempfänger in den oder hinter den Randbereich der Vorderseite der Anzeigeeinheit in diese zu integrieren, wobei die Vorderseite durch die Information anzeigende Anzeigefläche und einen daran angrenzenden Randbereich definiert ist. Der Sender für die Sensorstrahlung ist unterhalb der Anzeigefläche, beispielsweise auf der Rückseite der Anzeigeeinheit, in einer Hinterleuchtungseinheit oder auch hinter dieser angeordnet. Es ist aber auch möglich, dass der Sender unterhalb des zuvor genannten Randbereich angeordnet ist. In jedem Fall ist nach der Erfindung vorgesehen, entweder die gesamte Näherungssensorik näher zur Anzeigefläche der Vorderseite der Anzeigeeinheit anzuordnen oder aber zumindest Teile der Näherungssensorik dergestalt anzuordnen.

Die Anzeigeeinheit ist typischerweise in einem Gehäuse untergebracht und von der Vorderwand des Gehäuses oder von einem in die Seitenwände des Gehäuses übergehenden Gehäuserahmen umgeben. Herkömmlicherweise ist die Näherungssensorik im Gehäuserahmen oder im an das Display angrenzenden Bereich der Vorderwand des Gehäuses untergebracht, also außerhalb des eigentlichen Displays angeordnet. Von diesem Konzept weicht die Erfindung ab, indem die Näherungssensorik zumindest in Teilen in das Display integriert ist. Würde also das erfindungsgemäße Display nicht von einem Gehäuse umgeben sein, wäre die Näherungssensorik ganz oder zumindest teilweise also weiterhin Bestandteil des Displays und insoweit in dieses also integriert, und zwar in dem Randbereich bzw. unterhalb des Randbereichs an einem Anzeigepanel des Displays, das die bild- bzw. symbolerzeugenden optischen Elemente aufweist. Entscheidend für die Erfindung ist es also, dass die gesamte Näherungssensorik oder zumindest Teile davon Bestandteil des Displays ist und nicht als separate Elemente in der Umgebung um das Display herum realisiert ist.

In weiterer vorteilhafter Ausgestaltung der Erfindung ist vorgesehen, dass die Anzeigeeinheit ein Anzeigepanel mit der Anzeigefläche und mit dem Randbereich aufweist. Herkömmlicherweise sind Anzeigepanele als sogenannte TFT-Panele ausgebildet, die eine Anzeigefläche definieren, welche durch die Pixel bzw. die von den Pixeln eingenommene Fläche definiert ist. Ein TFT-Panel weist darüber hinaus einen seitlich über diese Anzeigefläche hinausgehenden Überstand auf, in dem Treiberelektronik für die Pixel bzw. für die gesamte Anzeigeeinheit angeordnet ist. Die Treiberelektronik ist dann über zumeist Flexleiterkarten elektrisch angeschlossen. Auf diesen Flexleiterkarten kann nun erfindungsgemäß die Näherungssensorik oder zumindest Teile davon angeordnet sein, die aber auch auf dem Anzeigepanel direkt angeordnet sein kann. Für beide Fälle gilt, dass die Näherungssensorik oder Teile davon im nicht für die Anzeige von Information dienenden Randbereich um die Anzeigefläche des Displays an und/oder in diesem integriert ist.

Erfindungsgemäß wird der Überstandsbereich eines TFT-Panels genutzt werden, um dort erfindungsgemäß die Näherungssensorik bzw. zumindest Teile der Näherungssensorik, nämlich den oder die Empfänger unterzubringen.

Hierzu ist erfindungsgemäß vorgesehen, dass
- die Anzeigeeinheit ein Anzeigepanel und eine oberhalb des Anzeigepanels angeordnete Farbfilterschicht aufweist, die die Anzeigefläche definiert,
- das Anzeigepanel an zumindest einem Randabschnitt über die Farbfilterschicht übersteht und der Überstand den seitlich an die Anzeigefläche angrenzenden Randbereich bildet und
- dass der mindestens eine Empfänger in oder auf dem Überstand des Anzeigepanels angeordnet ist.

In weiterer vorteilhafter Ausgestaltung der Erfindung kann eine Hinterleuchtungseinheit zum Hinterleuchten der Anzeigeeinheit vorgesehen sein, wobei der mindestens eine Sender in und/oder auf und/oder unter der Hinterleuchtungseinheit angeordnet ist.

Bei der Sensorstrahlung handelt es sich vorzugweise um nicht sichtbares Licht im IR-Bereich, also um IR-Strahlung.

Zweckmäßig ist es, wenn die Anzeigeeinheit eine LCD-Anzeigeeinheit ist.

In weiterer zweckmäßiger Ausgestaltung der Erfindung kann vorgesehen sein, dass der mindestens eine Sender mit einer Optik zur Ausrichtung seines für die Strahlung sensitiven Bereichs in Richtung auf den Beobachtungsraum vor der Anzeigefläche versehen ist. Bei der Optik kann es sich um eine Lichtablenkfolie, eine Fresnel-Linse odgl. handeln.

Zusätzlich zur Näherungssensorik zur Erkennung eines vor der Anzeigeeinheit angeordneten Objekts, insbesondere auch des Abstandes des vor der Anzeigeeinheit angeordneten Objekts, kann die erfindungsgemäße Anzeigevorrichtung mit einer nicht-optisch arbeitenden Berührungssensorik, wie z. B. einer kapazitiv oder resistiv oder auf Ultraschallbasis arbeitenden Berührungssensorik ausgestattet sein.

Die nicht-optisch arbeitende Berührungssensorik ist insbesondere als Touchpanel ausgebildet, das auf der Vorderseite der Anzeigeeinheit und/oder auf der Farbfilterschicht und/oder hinter einer vor der Anzeigeeinheit und/oder vor der Farbfilterschicht angeordneten Abdeckscheibe positioniert ist.

Schließlich ist es bei einer weiteren Ausgestaltung der Erfindung auch möglich, dass bei Anordnung sowohl des mindestens einen Senders als auch des mindestens einen Empfängers im Randbereich der Vorderseite zur Vermeidung eines Übersprechens beide gegeneinander abgeschottet sind.

Im zuvor Gesagten ist die Näherungssensorik als mindestens einen Sender und mindestens einen Empfänger aufweisend charakterisiert. Gemäß einer Variante der Erfindung umfasst die Näherungssensorik als Empfänger eine Empfänger-Matrix z.B. einen Bildsensor, der im Randbereich der Vorderseite angeordnet und zur 2D-Bilderfassung vorgesehen ist. Insbesondere kann ein Empfänger auch zur 3D-Erfassung des Beobachtungsraums vorgesehen sein. Eine derartige Näherungssensorik (mit Sensorstrahlung) wird mitunter auch als TOF-Sensor (Time-Of-Flight) aufgefasst und kann sowohl als Einzelempfänger wie auch als Empfänger-Matrix ausgeführt sein.

Nachfolgend werden unter Bezugnahme auf die Zeichnung zwei Ausführungsbespiele der Erfindung näher erläutert. Im Einzelnen zeigen dabei:
- Fig. 1: eine Draufsicht auf ein TFT-Panel einer Anzeigeeinheit mit am Rand der Anzeigeeinheit und außerhalb dieser angeordneter Näherungssensorik, wie im Stand der Technik bekannt,
- Fig. 2: eine Schnittansicht entlang der Linie II-II der Fig. 1,
- Fig. 3: eine Draufsicht auf eine Anzeigevorrichtung nach der Erfindung, bei der die Näherungssensorik vollständig in dem durch das TFT-Panel der Anzeigeeinheit definierten Randbereich untergebracht ist,
- Fig. 4: eine Schnittansicht entlang der Linie IV-IV der Fig. 3 und
- Fig. 5: eine alternative erfindungsgemäße Anzeigeeinheit in Schnittansicht.

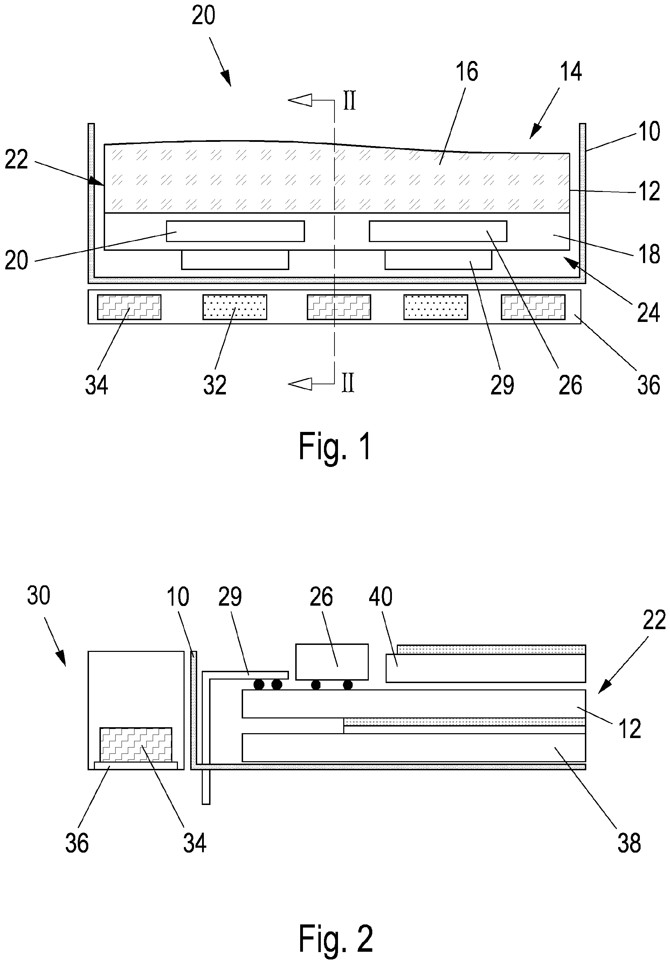

Die Fign. 1 und 2 zeigen die aktuell zum Stand der Technik gehörenden Lösungen für Anzeigevorrichtungen mit Näherungssensorik zur Erkennung der Annäherung von Objekten an die Anzeigeeinheit der Anzeigevorrichtung. Die Anzeigevorrichtung ist durch das Gehäuse 10 räumlich begrenzt und weist ein TFT-Panel 12 auf, auf dessen Anzeigefläche 14 ein Polarisator 16 mit einer darunterliegenden Color Plate angeordnet ist. Der Randbereich 18 des TFT-Panels 12 ist frei gelassen, weist also keine Pixel auf und gehört damit nicht zur Anzeigefläche 20 der Anzeigeeinheit 22.

Im Randbereich 18, der also sozusagen durch einen Überstand 24 des TFT-Panels 12 definiert ist, befinden sich beispielsweise Treiberschaltungen 26 für den Betrieb der Anzeigeeinheit 22. Über Flexleiterkarten (angedeutet bei 29) ist das TFT-Panel 12 elektrisch kontaktiert.

Wie anhand der Fign. 1 und 2 zu erkennen ist, befindet sich neben dem Gehäuse 10 der Anzeigevorrichtung eine Näherungssensorik 30 mit mindestens einem Sender 32 sowie mindestens einem Empfänger 34. Diese Näherungssensorik 30 ist auf einer zusätzlichen Leiterkarte 36 angeordnet.

Der zusätzliche Bauraum für die Unterbringung der Näherungssensorik 30, die im Stand der Technik selbstverständlich auch als von der Anzeigeeinheit 22 getrennte Einheit neben der Anzeige 22 innerhalb des Gerätegehäuses, in dem die Anzeigeeinheit 22 angeordnet ist, platziert sein kann, bereitet mitunter Probleme. Deshalb wird mit der Erfindung vorgeschlagen, zumindest einen Teil der Näherungssensorik 30, nämlich beispielsweise den oder die Empfänger 34, im Überstand 24 des TFT-Panels 12 unterzubringen; in diesem durch den Überstand 24 geschaffenen Randbereich 18 des TFT-Panels 12 befinden sich wiederum die Treiber 28 und zwischen diesen die Empfänger 34.

In einer Variante der Erfindung ist neben dem Empfänger 34 auch mindestens ein Sender 32 in diesem durch den Überstand 24 geschaffenen Randbereich 18 des TFT-Panels 12 untergebracht, in dem sich wiederum die Treiber 28 und zwischen diesen die Empfänger 34 und die Sender 32 befinden.

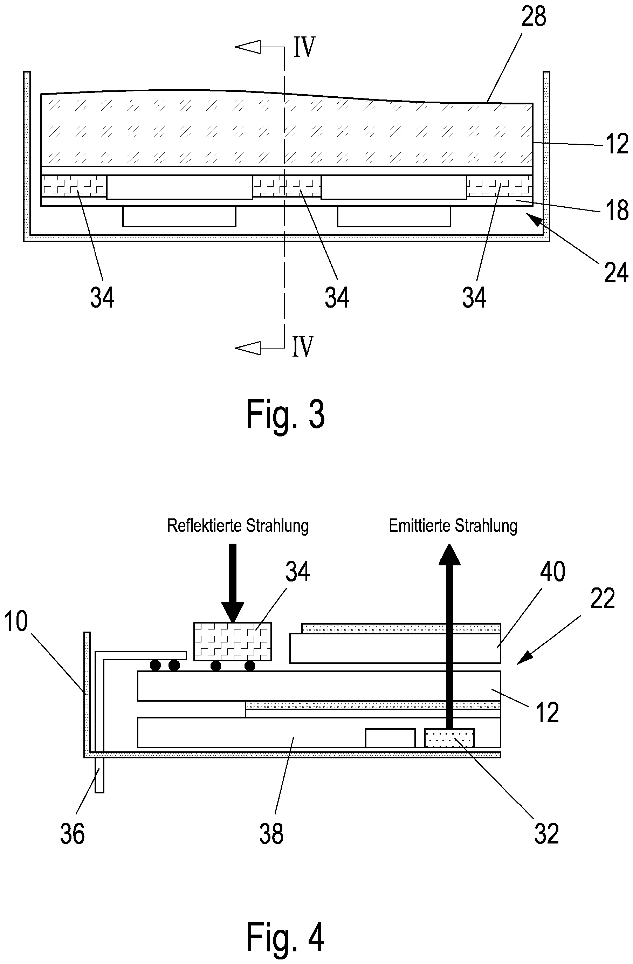

Dies ist anhand der Fign. 3 und 4 gezeigt. In Fig. 4 ist gezeigt, dass der bzw. die Sender 32 beispielsweise in der Hinterleuchtungseinheit 38 der Anzeigeeinheit 22 angeordnet sind. Ferner ist anhand von Fig. 4 zu erkennen, dass auf dem TFT-Panel 12 noch eine Farbfiltersicht (Color Plates) bzw. ein Farbfilter 40 angeordnet ist. Sowohl die Hinterleuchtungseinheit 38, das TFT-Panel 12 mit Farbfilter 40 und die Polarisatoren 16 sind zum Stand der Technik gehörende Elemente bei Anzeigevorrichtungen.

Wenn die Näherungssensorik auf Basis einer TOF-Messung von Sensorstrahlung basiert, dann sind sowohl der bzw. die Sender 32 als auch der oder die Empfänger 34 auf dem Überstand 24 des TFT-Panels 12 angeordnet. Die Sender 32 können aber auch Teil der Hinterleuchtungseinheit 38 sein.

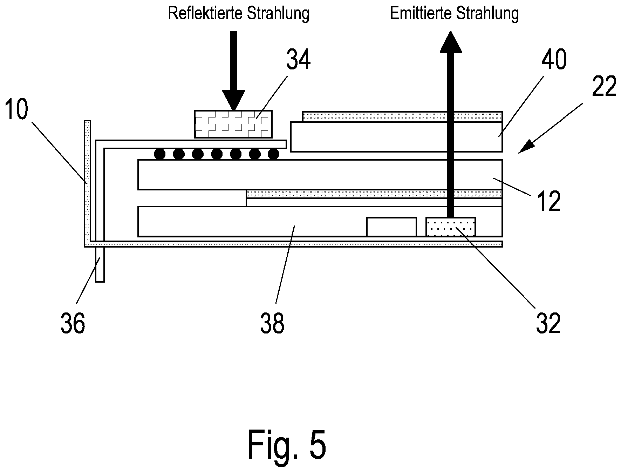

In Fig. 5 ist ein weiteres Ausführungsbeispiel der Erfindung als Alternative zu demjenigen nach den Fign. 3 und 4 gezeigt. Wie zu erkennen ist, befindet sich bei diesem Ausführungsbeispiel entweder die gesamte Näherungssensorik 30 oder ein Teil davon auf der flexiblen Leiterkarte 36, deren Kontaktfelder ihrerseits über leitenden Kleber mit dem TFT-Panel 12 elektrisch verbunden sind. Mehrere Sender 32 bzw. Empfänger 34 der Näherungssensorik 30 können nun auf der längs des Randes des Displays verlaufenden Leiterkarte 36 angeordnet sein (Im Ausführungsbeispiel sind die Empfänger 34 auf der flexiblen Leiterkarte 36 platziert, während die Sender 32 unterhalb des Displays angeordnet sind). Insoweit ist also auch eine elektrische Verbindung der Näherungssensorik 30 oder von Teilen der Näherungssensorik 30 mit der flexiblen Leiterkarte 36 als Anordnung der Näherungssensorik bzw. als Anordnung von Teilen davon im Randbereich der Vorderseite der Anzeigeeinheit 22 zu verstehen.

Alternativ zur zuvor beschriebenen Anzeigevorrichtung kann auch vorgesehen sein, die Sender der Näherungssensorik im Backlight, d. h. in die Hinterleuchtungseinheit des Displays anzuordnen, um dann allerdings die Empfänger der Näherungssensorik im Randbereich der Anzeigeeinheit anzuordnen. Dies kann aus Platzersparnisgründen bzw. aus Gründen eines begrenzten Platzangebots vorteilhaft sein.

Die Vorteile des erfindungsgemäßen Konzepts sind wie folgt:
- kein zusätzlicher Bauraum für die Näherungssensorik, da sie Teil der Anzeigeeinheit ist,
- "schlankes" Design der Anzeigeeinheit und der Anzeigevorrichtung mit schmalem Displayrahmen umsetzbar,
- keine zusätzlichen Lichtleiter erforderlich, wenn die Sender Teil der Beleuchtungseinheit sind, um eine Annäherung an die Anzeigeeinheit bzw. die Anzeigefläche zu gewährleisten.

Die Integration der Näherungssensorik oder zumindest von Teilen davon auf dem Überstandsbereich des TFT-Panels ermöglicht es, bekannte und prozesssichere elektronische Kontaktierungen einzusetzen und die elektrische Anbindung durch vorhandene Flex-Leiter zu realisieren. Die Empfänger (Sensoren) befinden sich damit nicht unter dem Farbfilter und auch nicht unter dem bzw. den Polarisartoren, wodurch keine Dämpfung der Strahlung erfolgt. Die von den Empfängern aufgenommene Strahlung ist hierdurch stärker und die Empfindlichkeit und die Signalstärke verbessern sich ohne, dass zusätzliche Maßnahmen nötig sind.

Es können Bauelemente für die Näherungssensorik eingesetzt werden, bei denen die Sensoren aus Sendern und Empfängern bestehen. Derartige spezielle komplexe Sensoren können ebenfalls verbaut und kontaktiert werden, wie oben beschrieben. Damit können beispielsweise Laufzeit messende Sensoren (Time-Of-Flight-Prinzip) oder auch Arraysensoren (d. h. Bildsensoren) mit gegebenenfalls Mikrolinsen in Form von Folien, Fresnel-Linsen etc. eingesetzt werden.

Die Erfindung wurde vorstehend anhand von Beispielen beschrieben, in denen die Näherungssensorik entweder vollständig, also Sender und Empfänger (ggf. mit Ansteuerung) im Randbereich des Displays angeordnet ist oder aber in denen zumindest einer der oder sämtliche Empfänger im Randbereich des Displays oder einer der oder sämtliche Sender unterhalb des Displays (oder unterhalb der Anzeigefläche des Displays und damit im Display, aber nicht in dessen Randbereich) angeordnet sind. Diese zuletzt genannte Konstruktion kann erfindungsgemäß aber auch unter Vertauschung von Sender und Empfänger erfolgen, so dass dann einer der oder die Sender im Randbereich des Displays und einer der oder die Empfänger unterhalb des Displays oder unterhalb der Anzeigefläche des Displays (also ggf. unterhalb der Anzeigefläche des Displays, aber nicht unterhalb von dessen Randbereich) angeordnet sind.

### BEZUGSZEICHENLISTE

- 10: Gehäuse
- 12: TFT-Panel
- 14: Anzeigefläche
- 16: Polarisator
- 18: Randbereich
- 20: Anzeigefläche
- 22: Anzeigeeinheit
- 24: Überstand
- 26: Treiberschaltungen
- 28: Treiber
- 29: Flexleiter
- 30: Näherungssensorik
- 32: Sender
- 34: Empfänger
- 36: Leiterkarte
- 38: Hinterleuchtungseinheit
- 40: Farbfilter

## Patentansprüche

1. Anzeigevorrichtung mit integrierter, optisch arbeitender Näherungssensorik zur Erkennung eines sich innerhalb eines Beobachtungsraums vor der Anzeigevorrichtung befindenden Objekts wie z. B. einer Hand oder eines Fingers einer Hand einer Person, mit
- einer Anzeigeeinheit (22), die eine Vorderseite mit einer Information anzeigenden Anzeigefläche (20), einen an die Anzeigefläche (20) angrenzenden, für die Anzeige von Information nicht verwendeten Randbereich (18) und eine Rückseite aufweist, und
- einer Näherungssensorik (30) mit mindestens einem Sender (32) zum Aussenden von Sensorstrahlung in Richtung auf den Beobachtungsraum und mit mindestens einem Empfänger (34) zum Empfangen von aus dem Beobachtungsraum reflektierter Sensorstrahlung,
- wobei der mindestens eine Sender (32) unterhalb der Anzeigeeinheit (22), z. B. seitlich unterhalb der Anzeigeeinheit (22), an der Rückseite der Anzeigeeinheit (22) oder der Rückseite der Anzeigeeinheit (22) zugewandt oder in der Anzeigeeinheit (22) angeordnet ist und der mindestens eine Empfänger (34) in dem an die Anzeigefläche (20) angrenzenden Randbereich (18) an der Vorderseite der Anzeigeeinheit (22) angeordnet ist,
- wobei die Anzeigeeinheit (22) ein Anzeigepanel (12) und eine oberhalb des Anzeigepanels (12) angeordnete Farbfilterschicht (40) aufweist, die die Anzeigefläche (20) definiert,
- wobei das Anzeigepanel (12) an zumindest einem Randabschnitt über die Farbfilterschicht (40) übersteht und der Überstand den seitlich an die Anzeigefläche (14) angrenzenden Randbereich (18) bildet und
- wobei der mindestens eine Empfänger (34) in oder auf dem Überstand des Anzeigepanels (12) angeordnet ist.

2. Anzeigevorrichtung nach Anspruch 1, **dadurch gekennzeichnet, dass** das Anzeigepanel (12) ein TFT-Panel ist.

3. Anzeigevorrichtung nach Anspruch 1 oder 2, **gekennzeichnet durch** eine Hinterleuchtungselnheit (38) zum Hinterleuchten der Anzeigeeinheit (22), wobei der mindestens eine Sender (32) in oder seitlich in und/oder auf und/oder unter der Hinterleuchtungseinheit (38) angeordnet ist.

4. Anzeigevorrichtung nach einem der Ansprüche 1 bis 3, **dadurch gekennzeichnet, dass** die Sensorstrahlung IR-Strahlung ist.

5. Anzeigevorrichtung nach einem der Ansprüche 1 bis 4, **dadurch gekennzeichnet, dass** die Anzeigeeinheit (22) eine LCD-Matrix-Anzeigeeinheit ist.

6. Anzeigevorrichtung nach einem der Ansprüche 1 bis 5, **dadurch gekennzeichnet, dass** der mindestens eine Sender (32) und/oder der mindestens eine Empfänger (34) mit einer Optik zur Ausrichtung der Strahlung in Richtung auf den Beobachtungsraum vor der Anzeigefläche (14) versehen ist.

7. Anzeigevorrichtung nach einem der Ansprüche 1 bis 6, **gekennzeichnet durch** eine nicht-optisch arbeitende Berührungssensorik, wie z. B. eine kapazitiv oder resistiv oder auf Ultraschallbasis arbeitende Berührungssensorik.

8. Anzeigevorrichtung nach Anspruch 7, **dadurch gekennzeichnet, dass** die Berührungssensorik ein Touchpanel aufweist, das auf der Vorderseite der Anzeigeeinheit (22) und/oder auf der Farbfilterschicht (40) und/oder hinter einer vor der Anzeigeeinheit (22) und/oder vor der Farbfilterschicht (40) angeordneten Abdeckscheibe positioniert ist.

9. Anzeigevorrichtung nach einem der Ansprüche 1 bis 8, **dadurch gekennzeichnet, dass** die Näherungssensorik (30) als Empfänger eine Empfänger-Matrix mit oder ohne Optik aufweist, die im Randbereich (18) der Vorderseite angeordnet und zur Bilderfassung oder zur 3D-Erfassung des Beobachtungsraums vorgesehen ist.

10. Anzeigevorrichtung nach Anspruch 9, **dadurch gekennzeichnet, dass** die Empfänger-Matrix ein Bildsensor ist.

11. Anzeigevorrichtung nach Anspruch 9 oder 10, **dadurch gekennzeichnet, dass** die Näherungssensorik (30) einen Sender (32) aufweist, der bei für die 2D- oder 3D-Erfasssung des Beobachtungsraums ungenügendem Umgebungslicht aktivierbar ist.

## Claims

1. A display device having an integrated, optically operating proximity sensor system for detecting an object present within an observation space in front of the display device, such as a hand or a finger of a hand of a person, provided with
- a display unit (22) comprising a front side having a display surface (20) fi displaying information, an edge region (18) adjoining the display surface (20) and not being used for displaying information, and a rear side, and
- a proximity sensor system (30) having at least one transmitter (32) for emitting sensor radiation toward the observation space and having at least one receiver (34) for receiving sensor radiation reflected out of the observation space,
- wherein the at least one transmitter (32) is arranged below the display unit (22), e.g. laterally below the display unit (22), on the rear side of the display unit (22), or facing the rear side of the display unit (22), or in the display unit (22), and the at least one receiver (34) is arranged in the edge region (18) adjoining the display surface (20) on the front side of the display unit (22),
- wherein the display unit (22) comprises a display panel (12) and a color filter layer (40) arranged above the display panel (12) and defining the display surface (20),
- wherein the display panel (12) protrudes from at least one edge portion beyond the color filter layer (40), and the protrusion forms the edge region (18) laterally adjoining the display surface (14), and
- wherein the at least one receiver (34) is arranged in or on the protrusion of the display panel (12).

2. The display device according to claim 1, **characterized in that** the display panel (12) is a TFT panel.

3. The display device according to claim 1 or 2, **characterized by** a backlight unit (38) for backlighting the display unit (22), wherein the at least one transmitter (32) is arranged in or laterally in and/or on and/or below the backlight unit (38).

4. The display device according to any one of claims 1 to 3, **characterized in that** the sensor radiation is IR radiation.

5. The display device according to any one of claims 1 to 4, **characterized in that** the display unit (22) is an LCD matrix display unit.

6. The display device according to any one of claims 1 to 5, **characterized in that** the at least one transmitter (32) and/or the at least one receiver (34) is provided with an optical system for aligning the radiation toward the observation space in front of the display surface (14).

7. The display device according to any one of claims 1 to 6, **characterized by** a non-optically operating touch sensor system, such as a capacitively or resistively or ultrasound-based operating touch sensor system.

8. The display device according to claim 7, **characterized in that** the touch sensor system comprises a touch panel which is positioned on the front side of the display unit (22) and/or on the color filter layer (40) and/or behind a cover glass arranged in front of the display unit (22) and/or in front of the color filter layer (40).

9. The display device according to any one of claims 1 to 8, **characterized in that** the proximity sensor system (30) comprises a receiver matrix with or without an optical system as a receiver that is arranged in the edge region (18) of the front side and provided for image capturing, in particular for 3D capturing of the observation space.

10. The display device according to claim 9, **characterized in that** the receiver matrix is an image sensor.

11. The display device according to claim 9 or 10, **characterized in that** the proximity sensor system (30) comprises a transmitter (32) that can be activated when the ambient light for 2D or 3D capturing of the observation space is insufficient.

## Revendications

1. Dispositif d'affichage avec un système de capteur de proximité intégré à fonctionnement optique pour la détection d'un objet, comme par exemple d'une main ou d'un doigt d'une main d'une personne, se trouvant à l'intérieur d'un espace d'observation devant le dispositif d'affichage, avec
- une unité d'affichage (22) comportant une face avant avec une surface d'affichage (20) affichant des informations, une zone de bord (18) adjacente à la surface d'affichage (20) et non utilisée pour l'affichage d'informations, et une face arrière, et
- un système de capteur de proximité (30) avec au moins un émetteur (32) pour émettre un rayonnement de capteur dans la direction de l'espace d'observation et avec au moins un récepteur (34) pour recevoir un rayonnement de capteur réfléchi depuis l'espace d'observation,
- l'au moins un émetteur (32) étant agencé en dessous de l'unité d'affichage (22), par exemple latéralement en dessous de l'unité d'affichage (22), sur la face arrière de l'unité d'affichage (22) ou orienté vers la face arrière de l'unité d'affichage (22) ou dans l'unité d'affichage (22) et l'au moins un récepteur (34 ) étant agencé dans la zone de bord (18) adjacente à la surface d'affichage (20) sur la face avant de l'unité d'affichage (22),
- l'unité d'affichage (22) comportant un panneau d'affichage (12) et une couche de filtres de couleur (40) agencée au-dessus du panneau d'affichage (12) et définissant la surface d'affichage (20),
- le panneau d'affichage (12) dépassant la couche de filtres de couleur (40) à au moins une partie de bord et la saillie formant la zone de bord (18) adjacente à la surface d'affichage (14) et
- l'au moins un récepteur (34) étant agencé dans ou sur la saillie du panneau d'affichage (12).

2. Dispositif d'affichage selon la revendication 1, **caractérisé en ce que** le panneau d'affichage (12) est un panneau TFT.

3. Dispositif d'affichage selon la revendication 1 ou 2, **caractérisé par** une unité de rétroéclairage (38) pour rétroéclairer l'unité d'affichage (22), l'au moins un émetteur (32) étant agencé dans ou latéralement dans et/ou sur et/ou sous l'unité de rétroéclairage (38).

4. Dispositif d'affichage selon l'une des revendications 1 à 3, **caractérisé en ce que** le rayonnement de capteur est un rayonnement IR.

5. Dispositif d'affichage selon l'une des revendications 1 à 4, **caractérisé en ce que** l'unité d'affichage (22) est une unité d'affichage à matrice LCD.

6. Dispositif d'affichage selon l'une des revendications 1 à 5, **caractérisé en ce que** l'au moins un émetteur (32) et/ou l'au moins un récepteur (34) est pourvu d'une optique pour aligner le rayonnement en direction de l'espace d'observation devant la surface d'affichage (14).

7. Dispositif d'affichage selon l'une des revendications 1 à 6, **caractérisé par** un système de capteur tactile à fonctionnement non optique, comme par exemple un système de capteur tactile capacitif ou résistif ou fonctionnant à base d'ultrasons.

8. Dispositif d'affichage selon la revendication 7, **caractérisé en ce que** le système de capteur tactile comporte un panneau tactile positionné sur la face avant de l'unité d'affichage (22) et/ou sur la couche de filtres de couleur (40) et/ou derrière une plaque de recouvrement agencée devant l'unité d'affichage (22) et/ou devant la couche de filtres de couleur (40).

9. Dispositif d'affichage selon l'une des revendications 1 à 8, **caractérisé en ce que** le système de détection de proximité (30) comporte comme récepteur une matrice réceptrice avec ou sans optique, agencée dans la zone de bord (18) et prévue pour la capture d'images ou pour la capture 3D de l'espace d'observation.

10. Dispositif d'affichage selon la revendication 9, **caractérisé en ce que** la matrice réceptrice est un capteur d'images.

11. Dispositif d'affichage selon la revendication 9 ou 10, **caractérisé en ce que** le système de capteur de proximité (30) comporte un émetteur (32) qui peut être activé lorsque la lumière ambiante est insuffisante pour la capture 2D ou 3D de la zone d'observation.
